(19)
Europäisches
Patentamt
European
Patent Office
Office européen
des brevets

(11) **EP 2 422 170 B2**

(12) **NOUVEAU FASCICULE DE BREVET EUROPEEN**
Après la procédure d'opposition

(45) Date de publication et mention de la décision concernant l'opposition:
**30.10.2019 Bulletin 2019/44**

(45) Mention de la délivrance du brevet:
**11.05.2016 Bulletin 2016/19**

(21) Numéro de dépôt: **10717706.5**

(22) Date de dépôt: **31.03.2010**

(51) Int Cl.:
***G01G 19/44*** *(2006.01)*

(86) Numéro de dépôt international:
**PCT/FR2010/050616**

(87) Numéro de publication internationale:
**WO 2010/122252 (28.10.2010 Gazette 2010/43)**

(54) **PROCÉDÉ ET DISPOSITIF DE PESAGE**

WÄGEEINRICHTUNG UND VERFAHREN

WEIGHING DEVICE AND METHOD

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **21.04.2009 FR 0952613**

(43) Date de publication de la demande:
**29.02.2012 Bulletin 2012/09**

(60) Demande divisionnaire:
**16163901.8 / 3 062 072**

(73) Titulaire: **Withings**
**92130 Issy les Moulineaux (FR)**

(72) Inventeurs:
- **HUTCHINGS, Cédric**
  **F-92130 Issy Les Moulineaux (FR)**
- **CARREEL, Eric**
  **F-92190 Meudon (FR)**

(74) Mandataire: **Cabinet Plasseraud**
**66, rue de la Chaussée d'Antin**
**75440 Paris Cedex 09 (FR)**

(56) Documents cités:
**EP-A1- 1 239 268 WO-A1-2007/102708**

EP 2 422 170 B2

Printed by Jouve, 75001 PARIS (FR)

**Description**

La présente invention est relative aux procédés et dispositifs de pesage.

Plus particulièrement, l'invention concerne le domaine des pèse-personnes électroniques. Ces appareils sont devenus de plus en plus sophistiqués : à titre d'exemple, certains modèles, dotés de fonctions de mesure d'impédance, permettent de mesurer non seulement la masse de l'utilisateur, mais également d'autres paramètres tels que le taux de graisse, de matière maigre, d'hydratation, l'indice de masse de masse corporelle, etc. Cette sophistication entraîne une complexité de l'afficheur et des boutons de commande du pèse-personne, ce qui est peu pratique compte tenu du fait que le pèse-personne est disposé sur le sol.

Pour rendre les pèse-personnes plus ergonomiques, on peut utiliser des dispositifs de pesage comportant un pèse-personne communiquant avec une liaison sans fil avec une interface utilisateur déportée, et c'est à ce type de pèse-personne, comme celui décrit dans le document EP 1239268, que se rapporte plus spécialement l'invention.

Le document US-B-6 781 067 décrit un exemple d'un tel pèse-personne, dans lequel le dispositif d'interface est un appareil spécifique fixé au mur, qui communique avec le pèse-personne par une liaison dédiée unidirectionnelle.

La présente invention a notamment pour but de perfectionner les pèse-personnes de ce type, notamment pour en améliorer l'ergonomie.

A cet effet, l'invention propose notamment un procédé de pesage utilisant un pèse-personne électronique comportant un écran et communiquant avec un terminal mobile de télécommunication doté d'un écran d'affichage, le pèse-personne et le terminal mobile communiquant tous deux par voie hertzienne avec un réseau de télécommunication, ledit réseau de télécommunication étant adapté pour faire communiquer au moins le terminal mobile avec au moins un dispositif de télécommunication supplémentaire, le réseau de télécommunication comprenant au moins un réseau local sans fil auquel appartiennent le pèse-personne et une plateforme qui communique au moins avec le pèse-personne, le procédé comprenant les étapes suivante :

(a0) une étape préliminaire d'association au cours de laquelle on fait afficher un code sur l'écran du pèse-personne, l'utilisateur saisit ledit code sur une interface d'entrée appartenant au terminal mobile, puis on fait envoyer ledit code par le pèse-personne au serveur par l'intermédiaire de la plateforme et on fait envoyer le code saisi sur l'interface d'entrée par le terminal mobile audit serveur, après quoi le serveur vérifie s'il y a correspondance entre le code reçu du pèse-personne (1) et le code reçu du terminal mobile, et s'il y a correspondance, le serveur fait associer le pèse-personne au terminal mobile dans le réseau local sans fil,

(a) au moins une étape de pesée au cours de laquelle le pèse-personne effectue au moins une mesure représentative au moins de la masse de l'utilisateur,

(b) au moins une étape de communication bidirectionnelle au cours de laquelle :

- un utilisateur entre des données dans le terminal mobile, et le terminal mobile transmet lesdites informations au pèse-personne par l'intermédiaire du réseau de télécommunication,
- le pèse-personne transmet au terminal mobile, par l'intermédiaire dudit réseau local sans fil, des données de pesage fonction de ladite mesure,

(c) et au moins une étape d'affichage au cours de laquelle le terminal mobile affiche sur l'écran, des informations fonction des données de pesage transmises à l'étape de communication.

Grâce à ces dispositions, on met à profit les fonctionnalités de l'interface utilisateur du terminal mobile, qui sont préexistantes et très riches, et on met également à profit les capacités de communication préexistantes du terminal mobile. On obtient ainsi, à moindre coût, un procédé de pesage qui est particulièrement ergonomique pour l'utilisateur. On notera que la communication de données vers le pèse-personne n'est pas nécessaire à chaque utilisation du pèse-personne par un même utilisateur ; au contraire, cette communication peut éventuellement être limitée à une étape initiale de configuration qu'un même utilisateur ne réalise qu'une fois à la première utilisation du pèse-personne, ou une fois de temps à autres.

De plus, compte tenu des possibilités de communication offertes par le réseau de télécommunication, le procédé selon l'invention rend possible d'accéder à des ressources externes, notamment pour enrichir les fonctionnalités offertes à l'utilisateur ou pour enrichir les données de pesage présentées à l'utilisateur en cours de pesage ou postérieurement.

Dans des modes de réalisation du procédé selon l'invention, on peut éventuellement avoir recours en outre à l'une et/ou à l'autre des dispositions suivante :

- au cours de l'étape de pesée (a), on effectue également une mesure impédancemétrique sur l'utilisateur, et au cours de l'étape de communication, les données entrées par l'utilisateur dans le terminal mobile comprennent un profil d'utilisateur et les données de pesage transmises par le pèse-personne au terminal mobile comprennent une masse et des données impédancemétriques fonction du profil d'utilisateur ;
- au cours de l'étape de communication, le pèse-personne transmet au terminal mobile, en temps réel, lesdites données de pesage fonction de ladite mesure, par le réseau de télécommunication, et au cours de l'étape d'affichage (d), le terminal mobile affiche en temps réel sur l'écran, pendant que l'utilisateur est sur le pèse-personne, lesdites informations fonction des données de pesage transmises à l'étape de communication montante ;

- le terminal mobile utilisé est un téléphone mobile ;
- le terminal mobile appartient également au réseau local sans fil et au cours de l'étape de communication, le pèse-personne transmet lesdites données de pesage au terminal mobile uniquement par l'intermédiaire dudit réseau local sans fil ;
- ledit réseau de télécommunication comporte en outre un réseau distant distinct du réseau local sans fil, la plateforme communique avec au moins un serveur par l'intermédiaire dudit réseau distant, le terminal mobile communiquant également avec ledit serveur par l'intermédiaire du réseau distant, et au cours de l'étape de communication, le pèse-personne transmet lesdites données de pesage au terminal mobile par l'intermédiaire dudit serveur, par ledit réseau distant ;
- au cours de l'étape de communication, le serveur transmet des informations supplémentaires au terminal mobile en plus desdites données de pesage, par ledit réseau distant ;
- au cours de l'étape de communication, le serveur communique avec le terminal mobile par l'intermédiaire de la plateforme ;
- au cours de l'étape de communication, le serveur communique avec le terminal mobile directement par le réseau distant sans passer par la plateforme ;
- l'étape de communication comporte une communication bidirectionnelle entre le pèse-personne et le terminal mobile ;
- au cours de l'étape de pesée, le pèse-personne cherche à faire correspondre automatiquement l'utilisateur avec au moins un profil d'utilisateur prédéterminé pour déterminer lesdites données de pesage en utilisant au moins une loi prédéterminée dépendant du profil d'utilisateur, et au cours de l'étape de communication, si l'utilisateur n'est pas un utilisateur habituel du pèse-personne, ledit utilisateur s'identifie comme invité sur le terminal mobile et le pèse-personne cesse alors de rechercher à faire correspondre automatiquement l'utilisateur avec un profil d'utilisateur prédéterminé ;
- si ledit utilisateur s'identifie comme invité sur le terminal mobile, alors le terminal mobile lui propose de sélectionner un profil d'utilisateur dans une liste préexistante, et après choix d'un profil d'utilisateur, ce profil est transmis au pèse-personne pour déterminer lesdites données de pesage en utilisant au moins une loi prédéterminée dépendant du profil d'utilisateur sélectionné ;
- au moins une étape de mise à jour au cours de laquelle le serveur met à jour un logiciel dans le pèse-personne ;
- les données de pesage comprennent la masse de l'utilisateur, calculée en utilisant au moins un paramètre de calcul de la masse de l'utilisateur à partir de ladite mesure représentative de la masse de l'utilisateur au cours de l'étape de mesure, et au cours de ladite étape de mise à jour, le serveur localise géographiquement le pèse-personne en utilisant des fonctionnalités de géolocalisation du réseau distant, et met à jour ledit paramètre de calcul de la masse de l'utilisateur en fonction de ladite localisation géographique ;
- les données de pesage comprennent la masse de l'utilisateur, calculée en utilisant au moins un paramètre de calcul de la masse de l'utilisateur à partir de ladite mesure représentative de la masse de l'utilisateur au cours de l'étape de mesure, ladite mesure représentative de la masse de l'utilisateur étant effectuée par au moins une jauge de contrainte appartenant au pèse-personne, et au cours de ladite étape de mise à jour, le serveur met à jour ledit paramètre de calcul de la masse de l'utilisateur en fonction de données statistiques relatives aux pèse-personnes en service ;
- les données de pesage comprennent des données impédancemétriques calculées à partir de mesures d'impédance effectuées par le pèse-personne, en utilisant au moins une loi de calcul prédéterminée, et au cours de ladite étape de mise à jour, le serveur met à jour ladite loi de calcul ;
- les données de pesage obtenues au cours de l'étape de mesure sont horodatées, et le procédé comprend une étape de mise à l'heure au cours de laquelle on met à jour une horloge interne appartenant au pèse-personne en utilisant des fonctionnalités de mise à l'heure disponibles dans ledit réseau de télécommunication ;
- au cours de l'étape de mesure, le pèse-personne fait effectuer un nombre n de mesures par n jauges de contrainte appartenant audit pèse-personne, et les données de pesage comprennent la masse de l'utilisateur, calculée selon une relation prédéterminée en fonction des n mesures des jauges de contraintes, le procédé comprenant une étape d'étalonnage au cours de laquelle on pose successivement une masse connue au moins n fois sur le pèse-personne, respectivement en n endroits différents et on mémorise à chaque fois les n mesures des jauges de contraintes, puis on détermine ladite relation prédéterminée à partir des mesures ainsi effectuées.

Par ailleurs, l'invention a également pour objet un dispositif de pesage comprenant :

- un pèse-personne électronique comportant un écran et adapté pour effectuer au moins une mesure représentative d'au moins la masse d'un utilisateur placé sur ledit pèse-personne,

- un terminal mobile de télécommunication doté d'un écran d'affichage et d'une interface d'entrée, le pèse-personne et le terminal mobile communiquant tous deux par voie hertzienne avec un réseau de télécommunication adapté pour faire communiquer au moins le terminal mobile avec au moins un dispositif de télécommunication supplémentaire, le pèse-personne étant adapté pour transmettre au terminal mobile, des données de pesage fonction de ladite mesure, par le réseau de télécommunication, le réseau de télécommunication comprenant au moins un réseau local sans fil auquel appartiennent le pèse-personne et' une plateforme qui communique au moins avec le pèse-personne,
le pèse-personne étant adapté pour faire afficher un code sur son écran et envoyer ledit code par le pèse-personne au serveur par l'intermédiaire de la plateforme,
le terminal mobile étant adapté pour recevoir ledit code par saisie sur son interface d'entrée et envoyer le code saisi sur l'interface d'entrée audit serveur,
le serveur étant adapté pour vérifier s'il y a correspondance entre le code reçu du pèse-personne et le code reçu du terminal mobile, et s'il y a correspondance, faire associer le pèse-personne au terminal mobile dans le réseau local sans fil,
et le terminal mobile étant adapté pour :

- transmettre au pèse-personne, par l'intermédiaire du réseau de télécommunication, des données entrées dans le terminal mobile par l'utilisateur,

- et afficher en temps réel sur l'écran, des informations fonction des données de pesage transmises par le pèse-personne.

Dans des modes de réalisation du dispositif selon l'invention, on peut éventuellement avoir recours en outre à l'une et/ou à l'autre des dispositions suivante :

- le pèse personne est adapté pour effectuer une mesure impédancemétrique sur l'utilisateur, les données de pesage comprenant une masse de l'utilisateur et des données impédancemétriques, le terminal mobile étant adapté :
- pour que l'utilisateur entre un profil d'utilisateur
- et pour transmettre ce profil d'utilisateur au pèse-personne,
  le pèse-personne étant adapté pour déterminer lesdites données impédancemétriques en fonction dudit profil d'utilisateur ;
- le profil d'utilisateur comprend l'âge, la taille et le sexe de l'utilisateur ;
- ledit réseau de télécommunication comporte un réseau distant et le pèse-personne est adapté pour transmettre lesdites données de pesage à un serveur par ledit réseau distant ;
- le terminal mobile utilisé est un téléphone mobile ;
- le réseau de télécommunication comprend au moins un réseau local sans fil auquel appartient le pèse-personne, le pèse-personne étant adapté pour transmettre lesdites données de pesage au terminal mobile par l'intermédiaire dudit réseau local sans fil ;
- ledit réseau local sans fil fonctionne selon un protocole de communication choisi parmi les protocoles WIFI et BLUETOOTH ;
- le terminal mobile appartient également au réseau local sans fil et le pèse-personne est adapté pour transmettre lesdites données de pesage au terminal mobile uniquement par l'intermédiaire dudit réseau local sans fil ;
- le réseau local comporte en outre une plateforme qui communique au moins avec le pèse-personne, et ledit réseau de télécommunication comporte en outre un réseau distant distinct du réseau local sans fil, la plateforme communiquant avec au moins un serveur par l'intermédiaire dudit réseau distant (5), le terminal mobile communiquant également avec ledit serveur par l'intermédiaire du réseau distant.

D'autres caractéristiques et avantages de l'invention apparaîtront au cours de la description suivante d'une de ses formes de réalisation, donnée à titre d'exemple non limitatif, en regard des dessins joints.
Sur les dessins :

- la figure 1 est une vue en perspective montrant un exemple de dispositif de pesage selon une forme de réalisation, comprenant un pèse-personne et un terminal mobile,
- la figure 2 est un schéma bloc illustrant certains composants des appareils appartenant au dispositif de pesage de la figure 1,
- la figure 3 montre un exemple de page écran pouvant être affichée par le terminal mobile du dispositif de pesage des figures 1 et 2, lors d'une étape initiale d'association entre le pèse-personne et le terminal mobile,
- la figure 4 montre un exemple de page écran pouvant être affichée par le terminal mobile du dispositif de pesage des figures 1 et 2, lors du pesage d'un utilisateur,
- et la figure 5 montre un exemple de page écran pouvant être affichée par le terminal mobile du dispositif de pesage des figures 1 et 2, lors de l'entrée du profil utilisateur d'un utilisateur invité.

Sur les différentes figures, les mêmes références désignent des éléments identiques ou similaires.

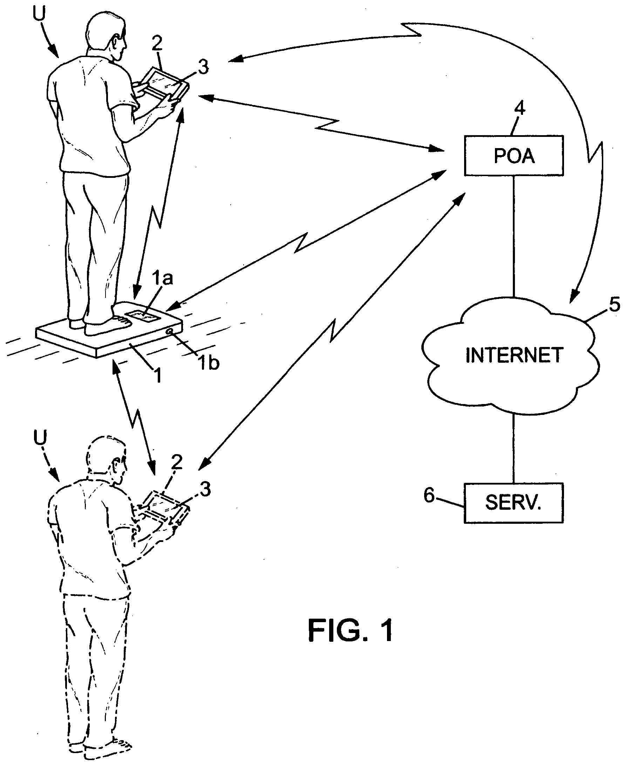

La figure 1 représente un exemple de dispositif de pesage selon une forme de réalisation de l'invention.
Ce dispositif de pesage comporte, dans tous les cas, un pèse-personne électronique 1 sur lequel peut se placer un utilisateur U pour mesurer notamment son poids, et un terminal mobile de télécommunication 2, doté d'un écran 3.
Le terminal mobile 2 en question peut classiquement être un téléphone mobile, mais pourrait également être constitué par tout autre appareil mobile portatif de type organiseur personnel ("PDA") ou autre, doté de capacités de communication radio.

Le pèse-personne 1 peut être par exemple un pèse - personne impédancemètre, adapté pour mesurer non seulement le poids de l'utilisateur U, mais également pour effectuer des masures d'impédance par la plante des pieds de l'utilisateur pour déterminer des paramètres tels que le taux de graisse, de matière maigre, d'hydratation, l'indice de masse de masse corporelle, etc. Le pèse-personne 1 est pourvu de moyens de communication radio.

Le terminal mobile 2 peut ainsi communiquer avec le pèse-personne 1 de façon bidirectionnelle au cours du pesage de l'utilisateur U, en faisant communiquer par voie hertzienne le pèse-personne 1 et le terminal mobile 2 avec un même réseau de télécommunication, homogène ou hétérogène.

Dans l'exemple particulier de la figure 1, le réseau de télécommunication susmentionné est un réseau hétérogène comprenant :

- d'une part, un réseau local sans fil fonctionnant par exemple selon le protocole WIFI (norme IEEE 802.11x) ou selon le protocole BLUETOOTH, ou autre,
- et, d'autre part, un réseau distant, en l'occurrence le réseau Internet 5, qui est relié au réseau local susmentionné par une plateforme 4 (POA) appartenant elle-même au réseau local sans fil. La plateforme 4 peut être constituée par toute passerelle connue fonctionnant en réseau local sans fil et formant un point d'accès Internet.

Le pèse-personne 1 et le terminal mobile 2 peuvent ainsi communiquer avec au moins un serveur distant 6 par l'intermédiaire du réseau Internet 5.

On notera que le terminal mobile 2 peut être pourvu de fonctionnalités lui donnant accès directement au réseau Internet, en utilisant par exemple une liaison radio de téléphonie de troisième génération (par exemple une liaison UMTS) ou supérieure, de sorte que le terminal mobile 2 peut éventuellement accéder au serveur 6 sans passer par l'intermédiaire de la plateforme 4.

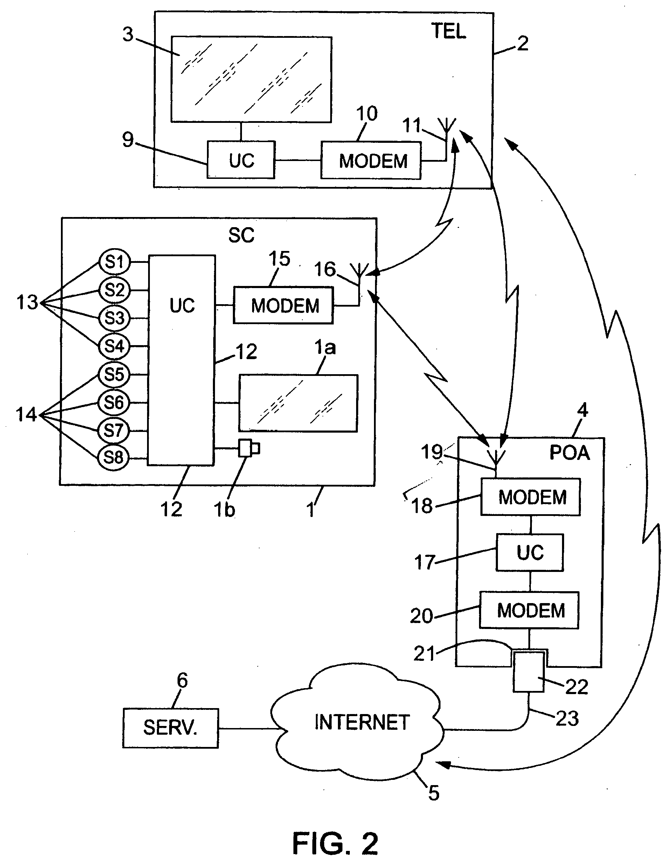

Comme représenté plus en détail sur la figure 2, le téléphone mobile 2 (TEL) peut comporter par exemple une unité centrale 9 (UC) telle qu'un microprocesseur ou similaire, commandant :

- l'écran 3,
- au moins un modem 10 relié à au moins une antenne 11 de radiocommunication pour communiquer soit avec le réseau local sans fil (par exemple en mode WIFI), soit directement avec le réseau Internet 5 (par exemple en mode UMTS).

L'écran 3 peut être un écran tactile servant d'interface d'entrée, ou bien le terminal mobile peut disposer d'un terminal d'entrée séparé tel qu'un clavier (non représenté), relié également à l'unité centrale 9.

Le pèse-personne 1 (SC) comporte, quant à lui, une unité centrale électronique 12 (UC) telle qu'un microprocesseur ou similaire, qui est reliée à :

- au moins un capteur de poids 13, par exemple à un nombre n de capteurs de poids S1-S4 tels que des jauges de contrainte, n pouvant par exemple être égal à 4,
- un ou plusieurs capteurs d'impédance 14 (S5-S8) pouvant effectuer des mesures d'impédance à partir de la plante des pieds de l'utilisateur U,
- un modem 15 relié à au moins une antenne 16 de radiocommunication pouvant communiquer avec le réseau local sans fil susmentionné,
- le cas échéant, un écran d'affichage 1a,
- et le cas échéant, un bouton d'association 1b dont l'utilité sera vue plus loin.

La plateforme 4, quant à elle, comporte une unité centrale électronique 17 (UC) tel qu'un microprocesseur ou similaire, qui est reliée :

- à un modem 18 adapté pour communiquer avec le réseau local sans fil au moyen d'une antenne 19,
- et à un modem supplémentaire 20, par exemple un modem ADSL, doté d'une prise de connexion 21 pouvant être reliée au connecteur 22 d'un câble 23 relié au réseau téléphonique pour accéder au réseau Internet 5.

Le dispositif qui vient d'être décrit peut fonctionner comme suit.

Etalonnage initial du pèse-personne

Avant toute mise en fonction du pèse-personne 1, on peut éventuellement effectuer une étape d'étalonnage de ce pèse-personne, soit en usine, soit chez l'utilisateur.

A titre d'exemple, l'unité centrale 12 du pèse-personne peut déterminer la masse M de l'utilisateur U lors d'un pesage, comme une combinaison linéaire des n mesures R1-Rn (n = 4 dans l'exemple considéré ici) effectuées simultanément par les n jauges de contrainte 13, multipliées respectivement par n paramètres de calcul $\alpha 1 \alpha n$ :

$$M = \alpha 1.R1 + \alpha 2.R2 + \ldots + \alpha n.Rn.$$

Dans ce cas, on peut déterminer les n paramètres de calcul $\alpha 1$-$\alpha n$ en positionnant successivement une masse connue M0 au moins n fois sur le pèse-personne 1, respectivement en n endroits différents, et en mémorisant à chaque fois les n mesures des jauges de contrainte. La masse M0 étant connue, on obtient ainsi au moins n équations à n inconnues (les paramètres de calcul $\alpha$1-$\alpha$n). La résolution de ce système d'équations linéaires, permet à l'unité centrale 12 du pèse-personne de calculer les n paramètres de calcul $\alpha$1-$\alpha$n.

Si cette étape d'étalonnage est effectuée par l'utilisateur, ledit utilisateur peut être guidé dans ce processus par des indications données par exemple par l'écran 1a du pèse-personne.

On notera que, lorsque l'étape d'étalonnage comporte plus que n pesées de la masse prédéterminée M0, cette étape d'étalonnage peut également permettre de vérifier que les jauges de contrainte 13 du pèse-personne peuvent être considérées comme des jauges minces dont la mesure résistance Ri varie linéairement avec la force subie Fi.

On notera que ce mode d'étalonnage peut être utilisé lorsque la masse M de l'utilisateur est calculée par une loi quelconque (y compris non linéaire) en fonction des mesures des jauges de contrainte 13.

**Etapes initiales d'association**

Avant toute utilisation du pèse-personne 1, il est nécessaire de l'intégrer au réseau local sans fil, et d'intégrer également à ce réseau local sans fil le terminal mobile 2, tout au moins lorsque le pèse-personne 1 et le terminal mobile 2 communiquent en utilisant uniquement le réseau local sans fil.

L'intégration du pèse-personne 1 dans le réseau local sans fil peut s'effectuer par association avec la plateforme 4, soit de façon purement automatique, soit en imposant à l'utilisateur des manipulations sur le pèse-personne 1 au moyen du bouton 1b et/ou d'autres boutons (non représentés) appartenant à ce pèse-personne, de façon que le pèse-personne 1 communique en WIFI avec la plateforme 4.

A l'issue de cette première étape d'association, le pèse personne 1 communique par le réseau local sans fil avec la plateforme 4, laquelle communique elle-même avec le serveur 6 par l'intermédiaire du réseau Internet 5.

De la même façon, le terminal mobile 2 peut entrer dans le réseau local sans fil par association avec la plateforme 4, de façon classique, ce qui permet ainsi au terminal mobile de dialoguer avec la plateforme 4, en mode WIFI dans l'exemple considéré ici.

En complément ou en variante, on peut associer directement le pèse-personne 1 avec le terminal mobile 2, de façon qu'ils dialoguent directement entre eux. A cet effet on peut avantageusement procéder comme suit :

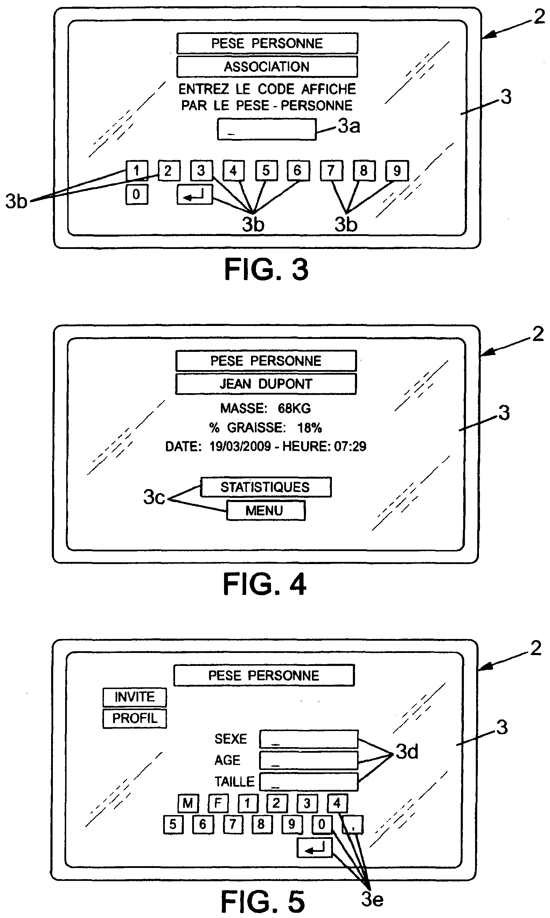

- l'utilisateur appuie sur le bouton d'association 1b du pèse-personne ;
- en réponse à l'actionnement de ce bouton 1b, l'unité centrale 12 du pèse-personne fait afficher sur son écran 1a un code, par exemple un code aléatoire, et avantageusement un code comportant peu de caractères (par exemple 4 chiffres) ;
- simultanément l'utilisateur U lance sur son terminal mobile une application "pèse-personne" et choisit dans un menu, une option "association" qui lui permet par exemple de faire afficher une page écran telle que celle représentée sur la figure 3, permettant à l'utilisateur de rentrer le code affiché sur l'écran 1a du pèse-personne dans un champ 3a de la page écran, l'entrée de ce code pouvant s'effectuer par exemple au moyen de touches virtuelles 3b affichées par l'écran tactile 3 ;
- le code saisi par l'utilisateur est transmis par le terminal mobile 2 au serveur 6, directement par le réseau Internet 5, grâce à la liaison UMTS ou similaire du terminal mobile ;
- le code affiché par l'écran 1a du pèse-personne 1 est transmis au même serveur 6 par le pèse-personne, par l'intermédiaire de la plateforme 4 et du réseau Internet 5 ;
- le serveur 6 compare les deux codes et en cas de correspondance, donne instructions au terminal mobile 2 et au pèse-personne 1 de s'associer pour dialoguer ensemble dans le réseau local sans fil WIFI.

On peut ainsi obtenir une communication bidirectionnelle directe en mode WIFI entre le pèse-personne 1 et le terminal mobile 2.

On notera que la communication bidirectionnelle entre le pèse-personne 1 et le terminal mobile 2 pourrait être obtenue de diverses autres façons dans le cadre de la présente invention, par exemple :

- en faisant communiquer le pèse-personne 1 et le terminal mobile 2 à l'intérieur du réseau local sans fil, mais par l'intermédiaire de la plateforme 4,
- en faisant communiquer le pèse-personne avec le serveur 6 par l'intermédiaire de la plateforme 4 et du réseau Internet 5, et en faisant communiquer le terminal mobile 2 avec le serveur 6 par la liaison radio distante (UMTS dans l'exemple considéré) du terminal mobile.

**Pesage**

A chaque fois qu'un utilisateur U veut utiliser le pèse-personne 1, il lance l'application "pèse-personne" sur son terminal mobile 2, de façon à activer la communication bidirectionnelle entre le pèse-personne 1 et le terminal mobile 2.

L'utilisateur U monte alors sur le pèse-personne 1, comme représenté en trait plein sur la figure 1, après quoi le pèse-personne 1 enregistre les mesures R1-R4 provenant des jauges de contrainte 13 (en pratique, des mesures de résistance) et des mesures d'impédance corporelle provenant des capteurs d'impédance 14. A partir de ces différentes mesures, l'unité centrale 12 du pèse-personne détermine la masse M de l'utilisateur par la formule susmentionnée M-$\alpha$1R1+$\alpha$2R2+$\alpha$3R3+$\alpha$4R4 (dans le cas considéré ici où le pèse-personne 1 comporte quatre jauges de contraintes).

Par ailleurs, pour traiter les mesures d'impédance provenant des capteurs d'impédance 14, l'unité centrale 12 du pèse-personne utilise des lois de calculs prédéterminées permettant d'obtenir des paramètres tels que le taux de graisse, le taux de matière maigre, le taux d'hydratation, l'indice de masse corporelle, etc. Ces lois prédéterminées sont généralement des lois empiriques dépendant du profil de l'utilisateur, et notamment de son sexe, de son âge et de sa taille.

L'unité centrale 12 peut avoir en mémoire un certain nombre d'utilisateurs habituels du pèse-personne 1 avec leur profil d'utilisateur et les dernières mesures de masse effectuées. L'unité centrale 12 de pèse-personne peut ainsi reconnaître automatiquement l'utilisateur U en train de se servir du pèse-personne, en fonction de la masse mesurée.

En variante, les profils des utilisateurs habituels peuvent être stockés sur la plateforme 4 ou sur le serveur 6 auquel cas, le pèse-personne 1 va rechercher sur l'un de ses appareils le profil d'utilisateur le plus proche de l'utilisateur U en train de se servir du pèse-personne 1.

Une fois déterminé le profil d'utilisateur qui correspond à l'utilisateur U en train de se servir du pèse-personne 1, l'unité centrale 12 du pèse-personne peut utiliser la loi de calcul des données impédancemétriques qui correspond au profil d'utilisateur, et faire afficher par exemple une page d'écran telle que celle de la figure 4, sur l'écran 3 du terminal mobile 2.

Dans cet exemple, l'écran 3 du terminal mobile affiche le nom correspondant au profil d'utilisateur (ici "Jean Dupont"), la masse mesurée (ici 68 kg), au moins un paramètre impédancemétrique calculé lors du pesage, par exemple le taux de graisse (ici 18 %), et la date et l'heure de la mesure (ici le 19 mars 2009 à 7H29).

La page écran affichée sur l'écran 3 comporte également des touches virtuelles 3c de l'écran tactile, par exemple une touche MENU permettant d'accéder par exemple à différentes options d'affichage (notamment pour faire afficher d'autres données de pesage impédancemétriques), et une touche STATISTIQUES permettant d'accéder par exemple à des données statistiques stockées par exemple sur le serveur 6.

Les données de pesage (masse et données impédancemétriques) horodatées, sont transférées au serveur 6 :

- soit par le pèse-personne 1 par l'intermédiaire de la plateforme 4,
- soit par le terminal mobile 2, par l'intermédiaire de la plateforme 4 ou directement par sa liaison radio distante (ici la liaison UMTS).

Avantageusement, lorsque l'application "pèse-personne" est lancée sur le terminal mobile 2, l'écran tactile 3 du terminal mobile peut afficher un bouton virtuel "INVITE" qui, lorsqu'il est actionné par l'utilisateur U, stoppe la recherche automatique d'un profil d'utilisateur préexistant et fait afficher une page d'écran telle que celle représentée sur la figure 5, où l'utilisateur peut entrer des informations sur son sexe, son âge et sa taille dans trois champs 3D, au moyen de touches virtuelles 3e affichées sur l'écran tactile 3 du terminal mobile 2.

Une fois entré le profil d'utilisateur de l'invité, les données impédancemétriques peuvent alors être calculées et affichées avec la masse de l'utilisateur sur l'écran 3 du terminal mobile, comme déjà expliqué précédemment et comme représenté sur la figure 4.

On notera que les donnes de pesage peuvent être consultées par l'utilisateur U sur le terminal 2 non seulement lorsqu'il est sur le pèse-personne 1, mais également lorsqu'il en est éloigné, comme représenté en traits mixtes sur la figure 1. Eventuellement, l'utilisateur U pourrait utiliser le pèse-personne 1 sans son terminal mobile 2, en lisant simplement l'écran 1a du pèse-personne, puis pourrait consulter plus tard, sur le terminal 2, les données de pesage transmises par le pèse-personne 1.

**Mise à jour du pèse-personne**

Lorsque le pèse-personne 1 est en fonctionnement et communique avec la plateforme 4, le serveur 6 peut mettre à jour le logiciel faisant fonctionner le pèse-personne. De la même façon, le serveur 6 peut mettre à jour l'application "pèse-personne" fonctionnant sur le terminal mobile 2.

Ces mises à jour peuvent porter soit sur le code des logiciels en question, soit sur certains paramètres de calcul de la masse de l'utilisateur ou des données impédancemétriques calculées à partir des mesures d'impédance.

Ainsi, les paramètres $\alpha$i de calcul de la masse de l'utilisateur, peuvent être mis à jour de temps à autre en fonction de l'âge du pèse-personne 1, à partir de données statistiques relatives aux pèse-personnes en service, provenant par exemple de données issues du service après-vente et permettant de modéliser le vieillissement des jauges de contrainte du pèse-personne 1.

De la même façon, le serveur 6 peut mettre à jour dans la mémoire de l'unité centrale 12 du pèse-personne 1, les lois de calcul permettant de déterminer les données impédancemétriques en fonction des mesures d'impédance en fonction du profil d'utilisateur, ces mises à jour pouvant intervenir par exemple à l'occasion d'avancées scientifiques permettant des progrès dans lesdites lois de calcul.

Par ailleurs, lorsque l'étape initiale d'étalonnage de la balance est effectuée en usine, en un site correspondant à une valeur g0 d'accélération de la pesanteur, il est possible de mettre à jour les paramètres de calcul $\alpha$i de la masse de l'utilisateur en fonction de la localisation géographique du pèse-personne 1.

A cet effet, le serveur 6 peut par exemple localiser géographiquement le pèse-personne 1 en utilisant des fonctionnalités de géolocalisation du réseau Internet 5, par exemple simplement en fonction de l'adresse IP du pèse-personne 1. En variante, cette géolocalisation peut intervenir en utilisant des fonctionnalités de géolocalisation de la liaison radio distante utilisée par le terminal mobile 2, par exemple si cette liaison est une liaison UMTS.

En fonction de la localisation géographique du pèse-personne 1, le serveur 6 peut envoyer au pèse-personne 1 un paramètre correcteur g/g0 ou g est la valeur d'accélération de la pesanteur à l'emplacement où se trouve le pèse-personne 1, auquel cas le pèse-personne 1 corrige les paramètres initiaux $\alpha$i0 de calcul de masse par des paramètres de calcul corrigés $\alpha$i=$\alpha$i0*g/g0. On peut ainsi obtenir des mesures plus précises de la masse de l'utilisateur U en utilisant ces paramètres corrigés, dans la formule susmentionnée M = $\alpha$1.R1 + $\alpha$2.R2 + $\alpha$3.R3 + $\alpha$4.R4).

Enfin, l'horloge interne de l'unité centrale 12 du pèse-personne peut être mise à jour automatiquement, par exemple à chaque mise en service du pèse-personne ou à intervalle de temps régulier, par exemple en utilisant des fonctionnalités de mise à l'heure disponibles sur le réseau de communication avec lequel communique le pèse-personne, c'est-à-dire le réseau local sans fil et/ou le réseau Internet 5.

## Revendications

**1.** Procédé de pesage utilisant un pèse-personne électronique (1) comportant un écran (1a) et communiquant avec un terminal mobile de télécommunication (2) doté d'un écran d'affichage (3), le pèse-personne (1) et le terminal mobile (2) communiquant tous deux par voie hertzienne avec un réseau de télécommunication, ledit réseau de télécommunication étant adapté pour faire communiquer au moins le terminal mobile (2) avec au moins un dispositif de télécommunication supplémentaire (4,6), le réseau de télécommunication comprenant au moins un réseau local sans fil auquel appartiennent le pèse-personne (1) et une plateforme (4) qui communique au moins avec le pèse-personne (1),
le procédé comprenant les étapes suivantes :
(a0) une étape préliminaire d'association au cours de laquelle on fait afficher un code sur l'écran (1a) du pèse-personne, l'utilisateur saisit ledit code sur une interface d'entrée (3) appartenant au terminal mobile (2), puis on fait envoyer ledit code par le pèse-personne (1) au serveur (6) par l'intermédiaire de la plateforme (4) et on fait envoyer le code saisi sur l'interface d'entrée (1a) par le terminal mobile (2) audit serveur, après quoi le serveur vérifie s'il y a correspondance entre le code reçu du pèse-personne (1) et le code reçu du terminal mobile (2), et s'il y a correspondance, le serveur (6) fait associer le pèse-personne (1) au terminal mobile (2) dans le réseau local sans fil,

(a) au moins une étape de pesée au cours de laquelle le pèse-personne (1) effectue au moins une mesure représentative au moins de la masse de l'utilisateur,
(b) au moins une étape de communication bidirectionnelle au cours de laquelle :

- un utilisateur (U) entre des données dans le terminal mobile (2), et le terminal mobile transmet lesdites informations au pèse-personne (1) par l'intermédiaire du réseau de télécommunication ;
- le pèse-personne (1) transmet au terminal mobile (2), par l'intermédiaire dudit réseau local sans fil, des données de pesage fonction de ladite mesure,

(c) et au moins une étape d'affichage au cours de laquelle, le terminal mobile (2) affiche sur l'écran (3), des informations fonction des données de pesage transmises à l'étape de communication.

**2.** Procédé selon la revendication 1, dans lequel :

- au cours de l'étape de pesée (a), on effectue également une mesure impédance métrique sur l'utilisateur (U),
- au cours de l'étape de communication, les données entrées par l'utilisateur (U) dans le terminal mobile (2) comprennent un profil d'utilisateur et les données de pesage transmises par le pèse-personne (1) au terminal mobile (2) comprennent une masse et des données impédancemétriques fonction du profil d'utilisateur.

**3.** Procédé selon l'une quelconque des revendications précédentes, dans lequel :

- au cours de l'étape de communication (b), le pèse-personne (1) transmet au terminal mobile (2), en temps réel, lesdites données de pesage fonction de ladite mesure, par le réseau de télécommunication,
- et au cours de l'étape d'affichage (d), le terminal mobile (2) affiche en temps réel sur l'écran (3), pendant que l'utilisateur (U) est sur le pèse-personne (1), lesdites informations fonction des données de pesage transmises à l'étape de communication montante.

**4.** Procédé selon l'une quelconque des revendications précédentes, dans lequel le terminal mobile (2) utilisé est un téléphone mobile.

**5.** Procédé selon l'une quelconque des revendications précédentes, dans lequel ledit réseau de télécommunication comporte en outre un réseau distant (5) distinct du réseau local sans fil, la plateforme (4) communique avec au moins un serveur (6) par l'intermédiaire dudit réseau distant, le terminal mobile communiquant également avec ledit serveur (6) par l'intermédiaire du réseau distant (5),
et au cours de l'étape de communication, le pèse-personne (1) transmet lesdites données de pesage au terminal mobile (2) par l'intermédiaire de la plateforme (4) et dudit serveur (6), par ledit réseau distant (5).

**6.** Procédé selon l'une quelconque des revendications précédentes, dans lequel, au cours de l'étape de communication, le serveur (6) transmet des informations supplémentaires au terminal mobile (2) en plus desdites données de pesage, par ledit réseau distant (5).

**7.** Procédé selon l'une quelconque des revendications précédentes, dans lequel, au cours de l'étape de pesée, le pèse-personne (1) cherche à faire correspondre automatiquement l'utilisateur avec au moins un profil d'utilisateur prédéterminé pour déterminer lesdites données de pesage en utilisant au moins une loi prédéterminée dépendant du profil d'utilisateur,
et au cours de l'étape de communication, si l'utilisateur n'est pas un utilisateur habituel du pèse-personne (1),
ledit utilisateur s'identifie comme invité sur le terminal mobile (2) et le pèse-personne cesse alors de rechercher à faire correspondre automatiquement l'utilisateur avec un profil d'utilisateur prédéterminé.

**8.** Procédé selon la revendication 7, dans lequel, si ledit utilisateur s'identifie comme invité sur le terminal mobile (2), alors le terminal mobile lui propose de sélectionner un profil d'utilisateur dans une liste préexistante, et après choix d'un profil d'utilisateur, ce profil est transmis au pèse-personne (1) pour déterminer lesdites données de pesage en utilisant au moins une loi prédéterminée dépendant du profil d'utilisateur sélectionné.

**9.** Procédé selon l'une quelconque des revendications précédentes, comportant au moins une étape de mise à jour au cours de laquelle le serveur (6) met à jour un logiciel dans le pèse-personne (1).

**10.** Procédé selon la revendication 9, dans lequel les données de pesage comprennent la masse de l'utilisateur, calculée en utilisant au moins un paramètre de calcul de la masse de l'utilisateur à partir de ladite mesure représentative de la masse de l'utilisateur au cours de l'étape de mesure,
et au cours de ladite étape de mise à jour, le serveur (6) localise géographiquement le pèse-personne en utilisant des fonctionnalités de géolocalisation du réseau distant (5), et met à jour ledit paramètre de calcul de la masse de l'utilisateur en fonction de ladite localisation géographique.

**11.** Procédé selon l'une quelconque des revendications précédentes, dans lequel les données de pesage comprennent la masse de l'utilisateur, calculée en utilisant au moins un paramètre de calcul de la masse de l'utilisateur à partir de ladite mesure représentative de la masse de l'utilisateur au cours de l'étape de mesure, ladite mesure représentative de la masse de l'utilisateur étant effectuée par au moins une jauge de contrainte (13) appartenant au pèse-personne,
et au cours de ladite étape de mise à jour, le serveur (6) met à jour ledit paramètre de calcul de la masse de l'utilisateur en fonction de données statistiques relatives aux pèse-personnes (1) en service.

**12.** Procédé selon l'une quelconque des revendications 5 et 6, dans lequel les données de pesage comprennent des données impédancemétriques calculées à partir de mesures d'impédance effectuées par le pèse-personne, en utilisant au moins une loi de calcul prédéterminée, et au cours de ladite étape de mise à jour, le serveur (6) met à jour ladite loi de calcul.

**13.** Procédé selon l'une quelconque des revendications précédentes, dans lequel les données de pesage obtenues au cours de l'étape de mesure sont horodatées,
et le procédé comprend une étape de mise à l'heure au cours de laquelle on met à jour une horloge interne appartenant au pèse-personne en utilisant des fonctionnalités de mise à l'heure disponibles dans ledit réseau de télécommunication.

**14.** Procédé selon l'une quelconque des revendications précédentes, dans lequel, au cours de l'étape de mesure, le pèse-personne fait effectuer un nombre n de mesures par n jauges de contrainte (13) appartenant audit pèse-personne, et les données de pesage comprennent la masse de l'utilisateur, calculée selon une relation prédéterminée en fonction des n mesures des jauges de contraintes,
le procédé comprenant une étape d'étalonnage au cours de laquelle on pose successivement une masse connue au moins n fois sur le pèse-personne, respectivement en n endroits différents et on mémorise à chaque fois les n mesures des jauges de contraintes, puis on détermine ladite relation prédéterminée à partir des mesures ainsi effectuées.

**15.** Dispositif de pesage comprenant :

- un pèse-personne électronique (1) comportant un écran (1a) et adapté pour effectuer au moins une mesure représentative d'au moins la masse d'un utilisateur (U) placé sur ledit pèse-personne,

- un terminal mobile (2) de télécommunication doté d'un écran d'affichage (3) et d'une interface d'entrée (3), le pèse-personne (1) et le terminal mobile (3) communiquant tous deux par voie hertzienne avec un réseau de télécommunication adapté pour faire communiquer au moins le terminal mobile (2) avec au moins un dispositif de télécommunication supplémentaire (4, 6), le réseau de télécommunication comprenant au moins un réseau local sans fil auquel appartiennent le pèse-personne (1) et une plateforme (4) qui communique au moins avec le pèse-personne (1),

le pèse-personne (1) étant adapté pour transmettre au terminal mobile (2) des données de pesage fonction de ladite mesure, par le réseau de télécommunication,

le pèse-personne étant adapté pour faire afficher un code sur son écran (1a) et envoyer ledit code par le pèse-personne (1) au serveur (6) par l'intermédiaire de la plateforme (4),

le terminal mobile (2) étant adapté pour recevoir ledit code par saisie sur son interface d'entrée (3) et envoyer le code saisi sur l'interface d'entrée (1a) audit serveur (6),

le serveur (6) étant adapté pour vérifier s'il y a correspondance entre le code reçu du pèse-personne (1) et le code reçu du terminal mobile (2), et s'il y a correspondance, faire associer le pèse-personne (1) au terminal mobile (2) dans le réseau local sans fil,

et le terminal mobile (2) étant adapté pour :

- transmettre au pèse-personne (1), par l'intermédiaire du réseau local sans fil, des données entrées dans le terminal mobile (2) par l'utilisateur (U),
- et afficher sur l'écran (3), des informations fonction des données de pesage transmises par le pèse-personne (1).

## Patentansprüche

**1.** Verfahren zum Wägen unter Verwendung einer elektronischen Personenwaage (1), die einen Bildschirm (1a) aufweist und mit einem mobilen Telekommunikationsendgerät (2), das mit einem Anzeigebildschirm (3) ausgestattet ist, kommunizieren kann, wobei sowohl die Personenwaage (1) wie auch das mobile Endgerät (2) mittels elektromagnetischer Wellen mit einem Telekommunikationsnetz kommunizieren können, wobei das Telekommunikationsnetz geeignet ist, zumindest das mobile Endgerät (2) mit mindestens einer zusätzlichen Telekommunikationsvorrichtung (4,6) kommunizieren zu lassen, wobei das Telekommunikationsnetz mindestens ein drahtloses lokales Netzwerk aufweist, zu welchem die Personenwaage (1) und eine Plattform (4) gehören, die zumindest mit der Personenwaage (1) kommuniziert,

wobei das Verfahren die folgenden Schritte aufweist:

(a0) einen vorbereitenden Verknüpfungsschritt, im Verlaufe dessen auf dem Bildschirm (1a) der Personenwaage ein Code angezeigt wird, ein Benutzer an einer Eingabeschnittstelle (3) des mobilen Endgeräts (2) den Code erfasst, dann der Code von der Personenwaage (1) über die Plattform (4) zu dem Server (6) gesendet wird und der an der Eingabeschnittstelle (1a) erfasste Code von dem mobilen Endgerät (2) zu dem Server gesendet wird, woraufhin der Server prüft, ob es eine Übereinstimmung zwischen dem Code, der von der Personenwaage (1) herkommend empfangen wurde, und dem Code, der von dem mobilen Endgerät (2) herkommend empfangen wurde, gibt, und falls es eine Übereinstimmung gibt, der Server (6) in dem drahtlosen lokalen Netzwerk die Personenwaage (1) mit dem mobilen Endgerät (2) verknüpft,

(a) mindestens einen Wägungsschritt, im Verlaufe dessen die Personenwaage (1) mindestens eine Messung durchführt, die zumindest für die Masse des Benutzers repräsentativ ist,

(b) mindestens einen bidirektionalen Kommunikationsschritt, im Verlaufe dessen:

- ein Benutzer (U) Daten in das mobile Endgerät (2) eingibt und das mobile Endgerät über das Telekommunikationsnetz die Informationen zu der Personenwaage (1) sendet;
- die Personenwaage (1) Wägungsdaten der entsprechenden Messung über das drahtlose lokale Netzwerk zu dem mobilen Endgerät (2) sendet, und

(c) mindestens einen Anzeigeschritt, im Verlaufe dessen das mobile Endgerät (2) im Kommunikationsschritt gesendete, die Wägungsdaten betreffende Informationen auf dem Bildschirm (3) anzeigt.

**2.** Verfahren nach Anspruch 1, in welchem:

- im Verlaufe des Wägungsschritts (a) auch eine impedanzmetrische Messung an dem Benutzer (U) vorgenommen wird,
- im Verlaufe des Kommunikationsschritts die von dem Benutzer (U) in das mobile Endgerät (2) eingegebenen Daten ein Benutzerprofil aufweisen und die von der Personenwaage (1) zu dem mobilen Endgerät (2) gesendeten Wägungsdaten eine Masse und impedanzmetrische Daten des entsprechenden Benutzerprofils aufweisen.

**3.** Verfahren nach einem der vorstehenden Ansprüche, in welchem:

- im Verlaufe des Kommunikationsschritts (b) die Personenwaage (1) die Wägungsdaten der entsprechenden Messung in Echtzeit über das Telekommunikationsnetz zu dem mobilen Endgerät (2) sendet, und
- im Verlaufe des Anzeigeschritts (d) das mobile Endgerät (2) in Echtzeit, während der Benutzer (U) auf der Personenwaage (1) ist, die im Kommunikationsschritt aufwärts gesendeten, die Wägungsdaten betreffenden Informationen auf dem Bildschirm (3) anzeigt.

**4.** Verfahren nach einem der vorstehenden Ansprüche, in welchem das verwendete mobile Endgerät (2) ein Mobiltelefon ist.

**5.** Verfahren nach einem der vorstehenden Ansprüche, in welchem das Telekommunikationsnetz außerdem ein von dem drahtlosen lokalen Netzwerk verschiedenes Fernnetzwerk (5) aufweist, die Plattform (4) über das Fernnetzwerk mit mindestens einem Server (6) kommuniziert, das mobile Endgerät über das Fernnetzwerk (5) ebenfalls mit dem Server (6) kommuniziert, und im Verlaufe des Kommunikationsschritts die Personenwaage (1) die Wägungsdaten über die Plattform (4) und den Server (6) über das Fernnetzwerk (5) zu dem mobilen Endgerät (2) sendet.

**6.** Verfahren nach einem der vorstehenden Ansprüche, in welchem im Verlaufe des Kommunikationsschritts der Server (6) über das Fernnetzwerk (5) zusätzlich zu den Wägungsdaten weitere Informationen zu dem mobilen Endgerät (2) sendet.

**7.** Verfahren nach einem der vorstehenden Ansprüche, in welchem im Verlaufe des Wägungsschritts die Personenwaage versucht, dem Benutzer automatisch mindestens ein vorgegebenes Benutzerprofil zuzuordnen, um unter Verwendung mindestens eines vorgegebenen und von dem Benutzerprofil abhängigen Gesetzes die Wägungsdaten zu bestimmen, und
im Verlaufe des Kommunikationsschritts für den Fall, dass der Benutzer nicht der übliche Benutzer der Personenwaage ist, der Benutzer sich als Gast an dem mobilen Endgerät (2) identifiziert, und die Personenwaage dann den Versuch einer automatischen Zuordnung des Benutzers zu einem vorgegebenen Benutzerprofil beendet.

**8.** Verfahren nach Anspruch 7, in welchem für den Fall, dass sich der Benutzer als Gast an dem mobilen Endgerät (2) identifiziert, das mobile Endgerät ihm dann vorschlägt, aus einer vorliegenden Liste ein Benutzerprofil auszuwählen, und nach Auswahl eines Benutzerprofils dieses Profil zu der Personenwaage (1) gesendet wird, um unter Verwendung mindestens eines vorgegebenen Gesetzes, das von dem ausgewählten Benutzerprofil abhängig ist, die Wägungsdaten zu bestimmen.

**9.** Verfahren nach einem der vorstehenden Ansprüche, mit mindestens einem Aktualisierungsschritt, im Verlaufe dessen der Server (6) eine Software in der Personenwaage (1) aktualisiert.

**10.** Verfahren nach Anspruch 9, in welchem die Wägungsdaten die Masse des Benutzers aufweisen, die unter Verwendung mindestens eines Benutzermasse-Berechnungsparameters ausgehend von der Messung, die repräsentativ für die Masse des Benutzers ist, im Verlaufe des Messungsschritts berechnet worden ist, und
im Verlaufe des Aktualisierungsschritts der Server (6) unter Verwendung von Geolokalisationsfunktionen des Fernnetzwerks (5) die Personenwaage geographisch lokalisiert und abhängig von der geographischen Lokalisation den Benutzermasse-Berechnungsparameter aktualisiert.

**11.** Verfahren nach einem der vorstehenden Ansprüche, in welchem die Wägungsdaten die Masse des Benutzers aufweisen, die unter Verwendung mindestens eines Benutzermasse-Berechnungsparameters ausgehend von der Messung, die repräsentativ für die Masse des Benutzers ist, im Verlaufe des Messungsschritts berechnet worden ist, wobei die für die Masse des Benutzers repräsentative Messung mit Hilfe mindestens einer Dehnungseinrichtung (13), die zu der Personenwaage gehört, durchgeführt wird, und
im Verlaufe des Aktualisierungsschritts der Server (6) als Funktion von statistischen Daten, die sich auf die in Betrieb befindlichen Personenwaagen (1) beziehen, den Benutzermasse-Berechnungsparameter aktualisiert.

**12.** Verfahren nach einem der Ansprüche 5 und 6, in welchem die Wägungsdaten impedanzmetrische Daten aufweisen, die aus von der Personenwaage durchgeführten Impedanzmessungen unter Verwendung mindestens eines vorgegebenen Berechnungsgesetzes berechnet worden sind, und im Verlaufe des Aktualisierungsschritts der Server (6) das Berechnungsgesetz aktualisiert.

**13.** Verfahren nach einem der vorstehenden Ansprüche, in welchem die im Verlaufe des Messungsschritts gewonnenen Wägungsdaten mit Zeitangabe versehene Daten sind und das Verfahren einen Zeiteinstellungsschritt aufweist, in welchem unter Verwendung von Zeiteinstellungsfunktionen, die in dem Telekommunikationsnetz verfügbar sind, eine innere Uhr der Personenwaage aktualisiert wird.

**14.** Verfahren nach einem der vorstehenden Ansprüche, in welchem im Verlaufe des Messungsschritts die Personenwaage mittels n Dehnungseinrichtungen (13), die zu der Personenwaage gehören, eine Anzahl von n Messungen durchführen lässt, und in welchem die Wägungsdaten die Masse des Benutzers aufweisen, die gemäß einer vorgegebenen Beziehung als Funktion der n Messungen der Dehnungseinrichtungen berechnet worden ist,
wobei das Verfahren einen Eichschritt aufweist, im Verlaufe dessen eine bekannte Masse mindestens n Mal in Folge auf der Personenwaage jeweils an n unterschiedlichen Orten angeordnet wird und jedes Mal die n Messungen der Dehnungseinrichtungen gespeichert werden, dann aus den auf diese Weise durchgeführten Messungen die vorgegebene Beziehung bestimmt wird.

**15.** Wägungseinrichtung mit:

- einer elektronischen Personenwaage (1), die einen Bildschirm (1a) aufweist und geeignet ist, mindestens eine Messung durchzuführen, die zumindest für die Masse eines auf der Personenwaage angeordneten Benutzers (U) repräsentativ ist,
- einem mobilen Telekommunikationsendgerät (2), das mit einem Anzeigebildschirm (3) und einer Eingabeschnittstelle (3) ausgestattet ist, wobei sowohl die Personenwaage (1) wie auch das mobile Endgerät (3) mittels elektromagnetischer Wellen mit einem Telekommunikationsnetz kommunizieren können, das geeignet ist, zumindest das mobile Endgerät (2) mit mindestens einer zusätzlichen Telekommunikationsvorrichtung (4,6) kommunizieren zu lassen, wobei das Telekommunikationsnetz mindestens ein drahtloses lokales Netzwerk aufweist, zu welchem die Personenwaage (1) und eine Plattform (4) gehören, die mindestens mit der Personenwaage (1) kommuniziert,

wobei die Personenwaage (1) geeignet ist, Wägungsdaten der entsprechenden Messung über das Telekommunikationsnetz zu dem mobilen Endgerät (2) zu senden,
wobei die Personenwaage (1) geeignet ist, an ihrem Bildschirm (1a) einen Code anzeigen zu lassen und den Code von der Personenwaage (1) über die Plattform (4) zu dem Server (6) zu schicken,
wobei das mobile Endgerät (2) geeignet ist, den Code durch Erfassen an seiner Eingabeschnittstelle (3) zu empfangen und den an der Eingabeschnittstelle (3) erfassten Code zu dem Server (6) zu schicken,
wobei der Server (6) geeignet ist, zu prüfen, ob es eine Übereinstimmung zwischen dem von der Personenwaage (1) herkommend empfangenen Code und dem von dem mobilen Endgerät (2) herkommend empfangenen Code gibt, und für den Fall, dass es eine Übereinstimmung gibt, in dem drahtlosen lokalen Netzwerk die Personenwaage (1) mit dem mobilen Endgerät (2) zu verknüpfen, und
wobei das mobile Endgerät (2) geeignet ist,
von dem Benutzer (U) in das mobile Endgerät (2) eingegebene Daten über das drahtlose lokale Netzwerk zu der Personenwaage (1) zu senden und
von der Personenwaage (1) gesendete, die Wägungsdaten betreffende Informationen auf dem Bildschirm (3) anzuzeigen.

## Claims

**1.** Weighing method using an electronic body weighing scale (1) comprising a screen (1a) and communicating with a mobile telecommunication terminal (2) equipped with a display screen (3), the body weighing scale (1) and mobile terminal (2) both communicating by Hertzian waves with a telecommunication network, said telecommunication network being configured to enable at least the mobile terminal (2) to communicate with at least one supplementary telecommunication device (4, 6), the telecommunication network comprising at least one wireless local area network to which the body weighing scale (1) and a platform (4) which communicates at least with the body weighing scale (1) belong,
the method comprising the following steps:
(a0) a preliminary association step during which a code is displayed on the screen (1a) of the body weighing scale, the user enters said code on an input interface (3) belonging to the mobile terminal (2), whereupon said code is sent by the body weighing scale (1) to the server (6) via the platform (4) and the code entered via the input interface (1a) is sent by the mobile terminal (2) to said server, after which the server verifies whether there is a match between the code received from the body weighing scale (1) and the code received from the mobile terminal (2) and, if there is a match, the server (6) associates the body weighing scale (1) with the mobile terminal (2) in the wireless local area network,

(a) at least one weighing step during which the body weighing scale (1) takes at least one measurement representative of at least the user's weight,
(b) at least one two-way communication step during which:

- a user (U) enters data in the mobile terminal (2) and the mobile terminal transmits said information to the body weighing scale (1) via the telecommunication network,
- the body weighing scale (1) transmits weighing data based on said measurement to the mobile terminal (2) via said wireless local area network,

(c) and at least one display step during which the mobile terminal (2) displays on the screen (3) information based on the weighing data transmitted during the communication step.

**2.** Method as claimed in claim 1, wherein:

- during weighing step (a), a bioelectrical impedance measurement is also taken of the user (U),
- during the communication step, the data entered in the mobile terminal (2) by the user (U) comprises a user profile and the weighing data transmitted by the body weighing scale (1) to the mobile terminal (2) comprises a weight and bioelectrical impedance data based on the user profile.

**3.** Method as claimed in any one of the preceding claims, wherein:

- during communication step (b), the body weighing scale (1) transmits to the mobile terminal (2) said weighing data based on said measurement via the telecommunication network in real time,
- and during display step (d), the mobile terminal (2) displays in real time on the screen (3), whilst the user (U) is on the body weighing scale (1), said information based on the weighing data transmitted during the upload communication step.

**4.** Method as claimed in any one of the preceding claims, wherein the mobile terminal (2) used is a mobile telephone.

**5.** Method as claimed in any one of the preceding claims, wherein said telecommunication network further comprises a remote network (5) separate from the wireless local area network, the platform (4) communicates with at least one server (6) via said remote network, the mobile terminal also communicating with said server (6) via the remote network (5),
and during the communication step, the body weighing scale (1) transmits said weighing data to the mobile terminal (2) via the platform (4) and from said server (6) via said remote network (5).

**6.** Method as claimed in any one of the preceding claims, wherein during the communication step, the server (6) transmits supplementary information to the mobile terminal (2) in addition to said weighing data via said remote network (5).

**7.** Method as claimed in any one of the preceding claims, wherein during the weighing step, body the weighing scale (1) automatically searches for a match between the user and at least one predetermined user profile in order to determine said weighing data using at least one predetermined rule dependent on the user profile,
and during the communication step, if the user is not a regular user of the body weighing scale (1), said user is identified as a guest on the mobile terminal (2) and the body weighing scale then stops automatically searching for a match between the user and a predetermined user profile.

**8.** Method as claimed in claim 7, wherein if said user is identified as a guest on the mobile terminal (2), the mobile terminal then prompts him/her to select a user profile from a pre-existing list and after a user profile has been selected, this profile is transmitted to the body weighing scale (1) in order to determine said weighing data using at least one predetermined rule dependent on the selected user profile.

**9.** Method as claimed in any one of the preceding claims, comprising at least one updating step during which the server (6) updates software in the body weighing scale (1).

**10.** Method as claimed in claim 9, wherein the weighing data comprises the user's weight, calculated using at least one user weight calculation parameter based on said measurement representative of the user's weight taken during the measuring step,
and during said updating step, the server (6) geographically locates the body weighing scale using geographical locating functions of the remote network (5) and updates said user weight calculation parameter as a function of said geographical location.

**11.** Method as claimed in any one of the preceding claims, wherein the weighing data comprises the user's weight, calculated using at least one user weight calculation parameter based on said measurement representative of the user's weight taken during the measuring step, said measurement representative of the user's weight being taken by means of at least one strain gauge (13) belonging to the body weighing scale,
and during said updating step, the server (6) updates said user weight calculation parameter as a function of statistical data relating to the body weighing scales (1) in service.

**12.** Method as claimed in any one of claims 5 and 6, wherein the weighing data comprises bioelectrical impedance data calculated on the basis of impedance measurements taken by the body weighing scale using at least one predetermined calculation rule, and during said updating step, the server (6) updates said calculation rule.

**13.** Method as claimed in any one of the preceding claims, wherein the weighing data obtained during the measuring step is time-stamped,
and the method comprises an updating step during which an internal clock belonging to the body weighing scale is updated using updating functions available in said telecommunication network.

**14.** Method as claimed in any one of the preceding claims, wherein during the measuring step, the body weighing scale prompts a number n of measurements to be taken by n strain gauges (13) belonging to said body weighing scale and the weighing data comprises the user's weight calculated on the basis of a relation predetermined as a function of the n measurements of the strain gauges, the method comprising a calibration step during which a known weight is placed on the weighing scale at least n times in n different locations respectively and the n measurements of the strain gauges are stored each time, and said predetermined relation is then determined from the measurements thus taken.

**15.** Weighing device comprising:

- an electronic body weighing scale (1) comprising a screen (1a) and configured to take at least one measurement representative of at least the weight of a user (U) positioned on said body weighing scale,
- a mobile telecommunication terminal (2) equipped with a display screen (3) and an input interface (3), the body weighing scale (1) and mobile terminal (3) both communicating by Hertzian waves with a telecommunication network configured to enable at least the mobile terminal (2) to communicate with at least one supplementary telecommunication device (4, 6), the telecommunication network comprising at least one wireless local area network to which the body weighing scale (1) and a platform (4) which communicates at least with the body weighing scale (1) belong,

the body weighing scale (1) being configured to transmit to the mobile terminal (2) weighing data based on said measurement via the telecommunication network,
the body weighing scale being configured to display a code on its screen (1a) and send said code via the body weighing scale (1) to the server (6) by means of the platform (4), the mobile terminal (2) being configured to receive said code by input at its input interface (3) and send the code entered at the input interface (1a) to said server (6), the server (6) being configured to verify whether there is a match between the code received from the body weighing scale (1) and the code received from the mobile terminal (2) and, if there is a match, to associate the body weighing scale (1) with the mobile terminal (2) in the wireless local area network,
and the mobile terminal (2) is configured to:

- transmit to the body weighing scale (1) via the wireless local area network data entered in the mobile terminal (2) by the user (U),
- and display information based on the weighing data transmitted by the body weighing scale (1) on the screen (3) .

U
2
3
4
POA
1a
5
INTERNET
1b
1
U
2
3
6
SERV.

FIG. 1

TEL
2
3
10
11
9
UC
MODEM
SC
15
16
13
S1
S2
S3
S4
UC
MODEM
12
1a
14
S5
S6
S7
S8
4
19
POA
18
MODEM
12
1b
1
17
UC
20
MODEM
21
22
6
23
SERV.
INTERNET
5

FIG. 2

PESE PERSONNE
ASSOCIATION
ENTREZ LE CODE AFFICHE
PAR LE PESE - PERSONNE
3a
1 2 3 4 5 6 7 8 9
0
3b
3b
3b
2
3

FIG. 3

PESE PERSONNE
JEAN DUPONT
MASSE: 68KG
% GRAISSE: 18%
DATE: 19/03/2009 - HEURE: 07:29
STATISTIQUES
MENU
3c
2
3

FIG. 4

PESE PERSONNE
INVITE
PROFIL
SEXE
AGE
TAILLE
3d
M F 1 2 3 4
5 6 7 8 9 0 ,
3e
2
3

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1239268 A
- US 6781067 B